(19) Europäisches Patentamt
European Patent Office
Office européen des brevets

(11) **EP 4 769 984 A1**

(12) **EUROPEAN PATENT APPLICATION**

(43) Date of publication:
**01.07.2026 Bulletin 2026/27**

(21) Application number: **25217655.7**

(22) Date of filing: **21.11.2025**

(51) International Patent Classification (IPC):
*H04J 3/06* *(2006.01)*

(52) Cooperative Patent Classification (CPC):
**H04J 3/0667;** H04J 2203/0085

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 KR 20240200680
30.12.2024 KR 20240200681
30.12.2024 KR 20240200682
30.12.2024 KR 20240200683**

(71) Applicant: **Korea Electronics Technology Institute
Bundang-gu, Seongnam-si
Gyeonggi-do
13509 (KR)**

(72) Inventor: **PARK, Pusik
17005 Giheung-gu, Yongin-si (KR)**

(74) Representative: **Isarpatent
Patent- und Rechtsanwälte PartG mbB
Friedrichstraße 31
80801 München (DE)**

(54) **METHOD AND DEVICE OF PERFORMING TIME SYNCHRONIZATION**

(57)     Provided are a method and device of performing time synchronization. Delays and offsets are calculated through a messaging process in which a coordinator transmits a Sync message to one or more followers, the followers transmit Delay_Req messages to the coordinator in response to the Sync message, and the coordinator receiving the Delay_Req messages transmits a Delay_Resp message to the followers, and time synchronization is performed on the basis of the delays and offsets. Even when a plurality of followers are connected, the number of times PTP messages are transmitted is reduced by broadcasting the Sync message and/or the Delay_Resp message of the coordinator at once. Also, a transmission bandwidth occupied by PTP messages is reduced by performing PTP messaging using symbols that have significantly shorter lengths than existing PTP messages.

## FIG. 2

Sync,Delay_Req: SYMBOL
Delay_Resp: ETHERNET FRAME

**Description**

BACKGROUND

**1. Field of the Invention**

The present invention relates to a system and method for synchronizing time between a coordinator and a follower in a network.

**2. Discussion of Related Art**

Precise time synchronization between collaborating devices is essential in various fields, such as broadcasting, telecommunication, power grids, automation systems, financial trading systems, etc., and is achieved using Global Positioning System (GPS), Inter-Range Instrumentation Group time code format B (IRIG-B), network time protocol (NTP), Institute of Electrical and Electronics Engineers (IEEE) 802.1AS, precise time protocol (PTP) (IEEE 1588), and the like.

Among these schemes, PTP is widely used for supporting accurate and safe time synchronization of devices in a computer network, particularly an Ethernet network. According to PTP, Sync, Follow_up, Delay_Req, and Delay_Resp messages are exchanged between a master device and a slave device to calculate a time difference (offset) between the master device and the slave device, and time synchronization is achieved therebetween using the offset.

The PTP scheme is less demanding in a network when there are only a few devices to be synchronized, but when there are tens or hundreds of devices in a network, such as an in-vehicle network, that require time synchronization, a large number of time-synchronization messages are generated, which significantly consumes a bandwidth required for transmitting actual data between devices. The bandwidth occupancy of time synchronization messages increases with the number of devices in a network that perform time-synchronization using PTP. As an example, in the case of in-vehicle networks, the growing degree of electrification of vehicles causes an increase the number of devices included in the networks, and thus an effective bandwidth is gradually reduced due to PTP messages.

For example, 10 megabits/second (Mb/s) baseband signaling over a single twisted pair for short reach (10BASE-T1S), which is an emerging alternative to in-vehicle networks, has a transmission bandwidth of 10 Mb/s, which is a very high data rate compared to existing in-vehicle networks but may be affected by PTP messages. Also, due to a network structure in which several terminals share a bus in a multidrop fashion, a large number of control messages, such as PTP messages, may cause an actual data rate to drop dramatically.

SUMMARY OF THE INVENTION

To address the above-described issues, the present invention is directed to providing a time synchronization system and method for minimizing a reduction in an effective bandwidth caused by time synchronization in accordance with a precise time protocol (PTP) scheme of the related art.

The present invention is also directed to providing a time synchronization system and method that show higher precision than the PTP scheme of the related art.

According to an aspect of the present invention, there are provided a system and method for improving the efficiency of PTP messaging by reducing the number of transmissions of PTP messages compared to the PTP scheme of the related art. When a coordinator is connected to one or more followers in a network, to synchronize time of the followers with a clock of the coordinator, the coordinator transmits a Sync message to one or more followers, the followers transmit a Delay_Req message to the coordinator in response to the Sync message, and the coordinator receiving the Delay_Req message transmits a Delay_Resp message to the followers. Through this messaging process, delays and offsets are calculated, and time synchronization is performed on the basis of the delays and offsets. According to the present invention, even when a plurality of followers are connected, the number of times transmission PTP message is reduced by broadcasting Sync messages and/or Delay_Resp messages of a coordinate at once.

According to another aspect of the present invention, a transmission bandwidth occupied by PTP messages is reduced by performing PTP messaging using symbols that have significantly shorter lengths than PTP messages of the related art.

According to another aspect of the present invention, a user flexibly edits and sets symbols converted by coding data. According to most network standards, block coding such as 4B5B, 5B6B, 8B10B, etc., is performed to provide fixed symbols for control. According to the present invention, a system and method for a user to edit and set a block coding scheme freely are provided.

BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

FIG. 1 is a sequence diagram illustrating a precise time protocol (PTP) procedure according to the related art;
FIG. 2 is a sequence diagram illustrating a PTP messaging procedure in an Ethernet switch-based network according to exemplary embodiment 1 of the present invention;
FIG. 3 is a sequence diagram illustrating a PTP procedure according to the related art in a network in which one coordinator and a plurality of followers are connected;
FIG. 4 is a sequence diagram illustrating a PTP procedure according to exemplary embodiment 2 of the present invention in a network in which one coordinator and a plurality of followers are connected;
FIG. 5 is a sequence diagram illustrating a modified PTP procedure of the embodiment shown in FIG. 4 in a network in which one coordinator and a plurality of followers are connected;
FIG. 6 is a diagram showing a format of a Delay_Resp message according to the related art;
FIG. 7 is a diagram showing a format of a Delay_Resp message according to the present invention;
FIG. 8 is a sequence diagram illustrating an exceptional situation of exemplary embodiment 2 shown in FIG. 5;
FIG. 9 is a diagram showing a format of a Delay_Resp message in which processing of the exceptional situation of FIG. 8 is taken into consideration according to the present invention;
FIG. 10 is a diagram showing a format of a Delay_Resp message obtained by modifying the format of FIG. 9;
FIG. 11 is a sequence diagram illustrating a PTP messaging procedure according to exemplary embodiment 3 of the present invention when a master is a coordinator;
FIG. 12 is a sequence diagram illustrating a PTP messaging procedure according to exemplary embodiment 3 of the present invention when a master differs from a coordinator;
FIG. 13 is a diagram showing a configuration of a PTP coordinator according to the present invention;
FIG. 14 is a diagram showing a configuration of a PTP follower according to the present invention;
FIG. 15 is a block diagram illustrating a configuration of variable block coding according to the present invention; and
FIG. 16A and B is a block diagram illustrating a configuration of complex variable block coding according to the present invention.

DETAILED DESCRIPTION OF EXEMPLARY EMBODIMENTS

Advantages and features of the present invention and methods of achieving them will become apparent with reference to embodiments described in detail below with the accompanying drawings. However, the present invention is not limited to the embodiments disclosed below and can be implemented in various forms. The embodiments are only provided to make the disclosure of the present invention complete and fully convey the scope of the present invention to those of ordinary skill in the technical field to which the present invention pertains. The present invention is only defined by the scope of the claims.

The terminology used herein is for the purpose of describing the embodiments and is not intended to limit the present invention. In this specification, a singular form also includes a plural form unless particularly described otherwise. As used herein, the term "comprises" and/or "comprising" does not exclude the presence or addition of one or more components other than stated components. Throughout the specification, like reference numerals refer to like components, and the term "and/or" includes any or all combinations of stated components. Although "first," "second," etc., are used to describe various components, the components are not limited by the terms. These terms are only used to distinguish one component from others. Accordingly, a first component described below may be a second component without departing from the technical spirit of the present invention.

Unless otherwise defined, all terms (including technical and scientific terms) used herein may have meanings generally understood by those skilled in the technical field to which the present invention pertains. Also, unless particularly defined, terms defined in generally used dictionaries are not to be interpreted as deviating from lexical meanings. In the following description, identical reference numerals refer to substantially the same element, and under these rules, description may be given with reference to several drawings, and repetition or description deemed self-evident to those of ordinary skill in the art may be omitted.

Meanwhile, a master in a network and a master in a precise time protocol (PTP) procedure may be the same device or different devices. Accordingly, to avoid confusion, a master in a PTP procedure will be referred to as "coordinator," and other devices coordinating in the PTP procedure will be referred to as "followers."

A technical feature according to an exemplary embodiment of the present invention is that, when time synchronization is performed between devices in a network, the number of PTP messages of the related art or a length of the messages is reduced to improve data transmission efficiency of the network.

In this case, there may be various embodiments, and representative types of exemplary embodiments according to the present invention are given below.

    1. An efficient time synchronization system and method for a point-to-point connection structure (e.g., a star topology) employing an Ethernet switch.

    2. An efficient time synchronization system and method for a multi-drop network in which a coordinator and one or more followers are connected.

    3. An efficient time synchronization system and method for a standard network such as a 10 megabits/second (Mb/s) baseband signaling over a single twisted pair for short reach (10BASE-T1S) network, a 10 Mb/s baseband signaling over a single twisted pair for long reach (10BASE-T1L) network, or the like.

    4. A device and method for changing or editing a symbol table such that a PTP message may be implemented using a 5-bit or 10-bit symbol instead of a network frame with a long length (e.g., the minimum length of an Ethernet frame is 64 bytes = 512 bits).

Hereinafter, a PTP scheme according to the related art will be briefly described with reference to the accompanying drawings, and then the technical spirit of the present invention and various configurations that may be derived from the scope of the present invention will be described through exemplary embodiments of the present invention.

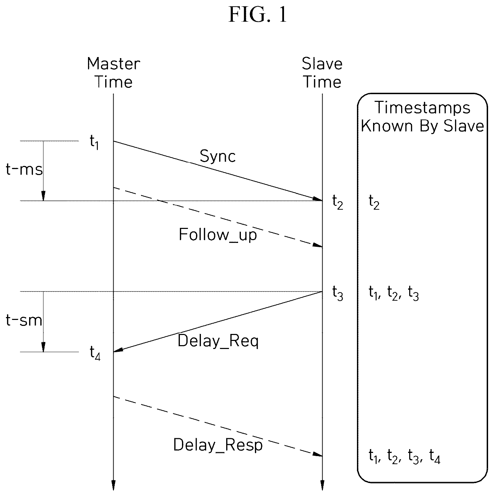

FIG. 1 is a sequence diagram illustrating a time synchronization protocol between a coordinator and a follower and an offset calculation method according to a PTP scheme of the related art defined in an Institute of Electrical and Electronics Engineers (IEEE) standard.

As shown in the drawing, (1) a coordinator transmits a Sync message to a follower at a time $t_1$. The Sync message arrives at the follower at a time $t_2$ after a transmission delay on a network. Here, the follower checks the time $t_2$ at which the Sync message is received by the follower itself. (2) The coordinator may transmit a Follow_up message for providing the accurate transmission time $t_1$ of the Sync message to the follower, and the follower may be aware of $t_1$ through the Follow_up message. (3) The follower transmits a Delay_Req message which is a request for measuring a transmission delay to the coordinator at time $t_3$. (4) The coordinator sends a Delay_Resp message including the time $t_4$ at which the Delay_Req message has been received by the coordinator itself to the follower in response to the Delay_Req message.

Through the above-described procedure, the follower is aware of all the times $t_1$, $t_2$, $t_3$, and $t_4$ and calculates a delay (transmission delay) and an offset (a time difference between clocks of the coordinator and the follower) using equation 1 below.

[Equation 1]

$$Delay\ D = \frac{(t_2 - t_1) + (t_4 - t_3)}{2}$$

[Equation 2]

$$Offset\ O = \frac{(t_2 - t_1) - (t_4 - t_3)}{2}$$

In other words, according to the PTP scheme, a transmission delay and an offset is calculated by a follower, and the follower that is aware of an offset, which is a time difference between a coordinator clock (a clock of a coordinator) and a follower clock of the follower, synchronizes the follower clock with the coordinator clock on the basis of the offset.

Here, when the PTP scheme according to the related art is used in Ethernet, each message uses an Ethernet frame (user datagram protocol (UDP) packets) with a minimum of 64 bytes (512 bits). Accordingly, when there are many slave devices to be synchronized, a significant loss of a network transmission band may be incurred.

Therefore, the present invention proposes a configuration for increasing a data transmission rate by reducing a length of PTP messages.

In addition, according to a PTP standard of the related art, a coordinator transmits a Follow_up message to a follower to provide an accurate transmission time $t_1$ of a Sync message. When another message provides $t_1$ to the follower (e.g., the Sync message or a Delay_Resp message includes $t_1$ and is provided to the follower), PTP may be implemented using three messages without the Follow_up message. Therefore, according to embodiments of the present invention, three messages including a Sync message, a Delay_Req message, and a Delay_Resp message are used for implementing PTP.

<Exemplary embodiment 1>

Exemplary embodiment 1 is an embodiment of implementing PTP in a network with a point-to-point connection structure. The present embodiment may be adopted by, for example, a star-topology network in which Ethernet switches are connected to network terminals on a one-to-one basis.

As described above, the number of messages for PTP time synchronization may be reduced by including not only $t_4$ information but also $t_1$ in a Delay_Resp message without using a Follow-up message.

In addition to this, the volumes of PTP messages are remarkably reduced using, for PTP messages, short-length symbols, such as 5-bit symbols or 10-bit symbols, instead of long messages such as an Ethernet frame (e.g., an Ethernet frame has a minimum of 64 bytes).

To aid in understanding, basic description of symbols according to the present invention will be given first, and then a PTP sequence of exemplary embodiment 1 will be described.

Communication systems of Ethernet, fiber distributed data interface (FDDI), etc., generally perform 4B5B block coding. In other words, a communication system encodes 4-bit information into 5-bit information and transmits the encoded information to a transmission line.

The basic reason for block coding is to ensure that there are not three or more consecutive 0s (zeros) in a transmission signal. When consecutive 0s are transmitted without any transition to "1," a receiving side receives an unclear signal. For this reason, 4-bit data is translated into a 5-bit code and output to a transmission line. Examples of 4B5B translation are shown in table 1 below.

[Table 1]

| 4-bit data | 5-bit code |
|------------|------------|
| 0000 | 11110 |
| 0001 | 01001 |
| 0010 | 10100 |
| 0011 | 10101 |
| 0100 | 01010 |
| 0101 | 01011 |
| 0110 | 01110 |
| 0111 | 01111 |
| 1000 | 10010 |
| 1001 | 10011 |
| 1010 | 10110 |
| 1011 | 10111 |
| 1100 | 11010 |
| 1101 | 11011 |
| 1110 | 11100 |
| 1111 | 11101 |

As shown in the code group illustrated in table 1, when 1s and 0s are appropriately arranged, it is easy to maintain clock synchronization, and when only a part of a 5-bit code is used as a valid code, it is easy to detect or prevent data transmission errors. Further, even when a person illegally intercepts a signal, unless he or she knows translation rules, he or she is unaware of a true value of transmission data, which is better for security. In other words, it is possible to maintain direct current (DC) balance and improve the reliability of data transmission.

In a communication system, such as a 10BASE-T1S system, a 10BASE-T1L system, etc., all or some of 5-bit translation codes are used as specific control codes (/N/: a symbol for a beacon signal; /J/: a Sync symbol for a first preamble byte of a commit or Ethernet frame; /H/: a start-of-stream delimiter (SSD), that is, a Sync symbol for a second preamble byte of an Ethernet frame; /T/: an end-of-stream delimiter (ESD), etc.,) shown in table 2 below, which are called symbols.

In the present invention, specific values of 5-bit codes are used as some PTP messages (a Sync message and/or a Delay_Req message) and called "symbols" in the present specification. This will be described in detail with reference to exemplary embodiment 4 below.

A PTP sequence of exemplary embodiment 1 will be described in detail below.

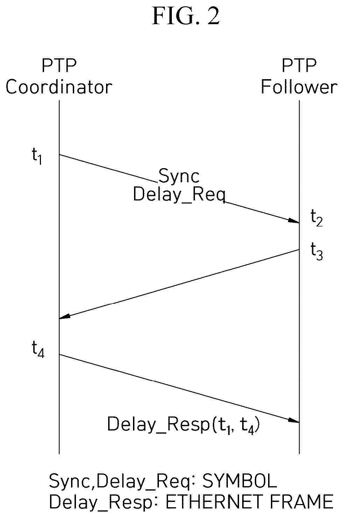

As shown in FIG. 2, a coordinator transmits a Sync message to a follower at a time $t_1$ on the basis of its own clock. Here, the Sync message is any predetermined one of 5-bit symbols and does not include time information such as $t_1$.

The follower that receives the Sync message stores $t_2$ that is a reception time of the Sync message determined on the basis of its own clock.

Subsequently, the follower transmits a Delay_Req message to the coordinator at a time $t_3$ that is a transmission time based on its own clock. The Delay_Req message is also certain predetermined one of the 5-bit symbols.

The follower that receives the Sync message and transmits the Delay_Req message may be aware of and store $t_2$ and $t_3$ information.

The coordinator that receives the Delay_Req message stores a reception time $t_3$ based on its own clock.

Subsequently, the coordinator transmits a Delay_Resp message containing $t_1$ and $t_4$ to the follower. Since it is necessary to transmit the time information $t_1$ and $t_4$, an Ethernet frame is preferably used as the Delay_Resp message.

The follower that receives the Delay_Resp message may be aware of the time information $t_2$ and $t_3$ based on its own clock and time information $t_1$ and $t_4$ based on the coordinator's clock, calculate an offset using equations 1 and 2, and perform time synchronization with the coordinator's clock.

While PTP messages according to the related art require 64 bytes $\times$ 4 = 2,048 bits to be transmitted, only 5 bits $\times$ 2 + 64 bytes $\times$ 1 = 522 bits are required according to exemplary embodiment 1. In other words, time synchronization can be performed using only 25.5% of the transmission volume of PTP messages of the related art.

Meanwhile, in the above-described example, it is assumed that there are one coordinator and one follower. However, even when a coordinator and followers are connected on a one-to-N basis, for example, a star topology in which a plurality of followers are connected to a central Ethernet switch, the above-described scheme can be applied in an expandable manner.

As described above, when the number of participating followers increases, the transmission volume of messages caused by PTP message transmission in a network is further reduced.

<Exemplary embodiment 2>

Exemplary embodiment 2 is intended to improve transmission efficiency by reducing PTP messages. Particularly, this may be more effective when one coordinator is connected to a plurality of followers in a multi-drop fashion in a network.

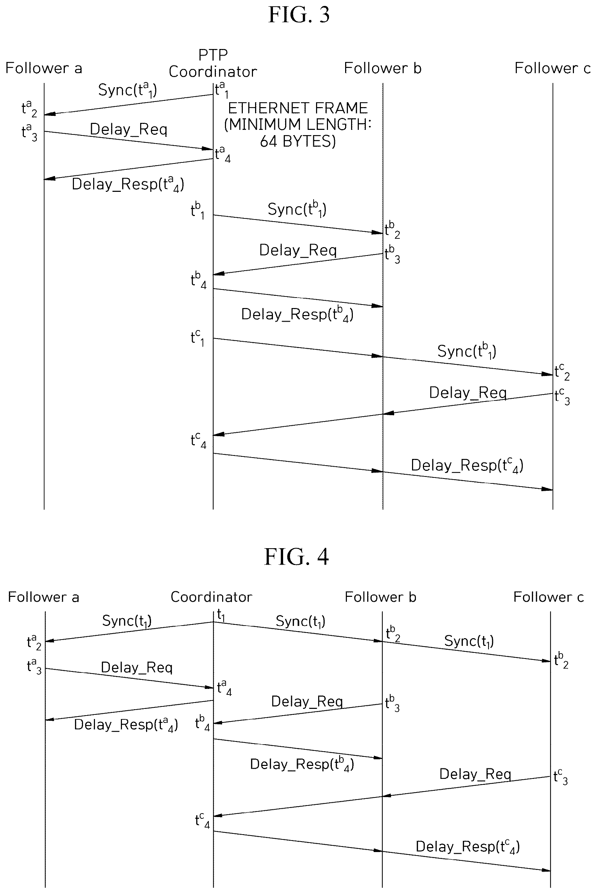

First, inefficiency of a case where the PTP scheme of the related art is used in a multi-drop network in which a plurality of followers participate will be described with reference to FIG. 3.

As shown in FIG. 3, when 3 followers (Follower a, Follower b, and Follower c) of a coordinator perform time synchronization, even if only 3 PTP messages are used, the PTP coordinator has to repeatedly transmit a Sync message three times, and each follower (Follower a, Follower b, and Follower c) has to transmit a Delay_Req message and receive a Delay_Resp message from the PTP coordinator. Therefore, message transmission and reception is performed 9 times (3 messages $\times$ 3 followers) in total, and a minimum transmission band of 4,608 bits is occupied. In addition, time synchronization has to be periodically performed, which may affect actual data transmission in 10-Mbps band.

Therefore, exemplary embodiment 2 makes use of the fact that time synchronization may be performed in accordance with the PTP scheme when a follower may be aware of the above-described time information $t_1$, $t_2$, $t_3$, and $t_4$. In this way, exemplary embodiment 2 provides a technique for a follower to be aware of the above-described time information $t_1$, $t_2$, $t_3$, and $t_4$ irrespective of a reduction in the number of PTP messages, thereby proposing a scheme for minimizing loss of a network transmission band.

Exemplary embodiment 2 has 3 sub-embodiments and illustrates a case where a coordinator and 3 PTP followers participate in a network. Exemplary embodiment 2 is a scheme for improving actual data transmission efficiency by utilizing frames for actual data transmission and reception, such as an Ethernet frame, by reducing the number of PTP messages.

<Exemplary embodiment 2-1>

The core of exemplary embodiment 2-1 is that a coordinator broadcasts a Sync message to reduce the number of Sync messages, which is shown in FIG. 4.

For example, in various multi-drop local networks such as a 10BASE-T1S network, a 10BASE-T1L network, a ZigBee network, etc., a network master performs transmission scheduling by broadcasting a beacon.

As described above, when a PTP coordinator broadcasts a Sync message and each follower receives the Sync message, the number of Sync messages may be reduced from 3 to 1. In exemplary embodiment 2-1, each PTP message that includes time information $t_1$, $t_4$, etc., using an Ethernet frame rather than symbols, is transmitted.

Regarding the number of messages in a 10BASE-T1S environment (a total of 8 terminals share one bus), according to the related art, Sync, Delay_Req, and Delay_Resp messages are exchanged with 7 followers, and thus 21 messages are transmitted and received. On the other hand, according to improved embodiment 2-1, one Sync message is broadcast to all the followers, and thus the total number of messages is 15 (one Sync message + 7 Delay_Req messages + 7 Delay_Resp messages), which is a reduced number.

In other words, time synchronization is possible using only 71.43% of a transmission band occupied for time synchronization according to the related art.

<Exemplary embodiment 2-2>

Exemplary embodiment 2-2 is a method of reducing the number of Delay_Resp messages by broadcasting a Delay_Resp message.

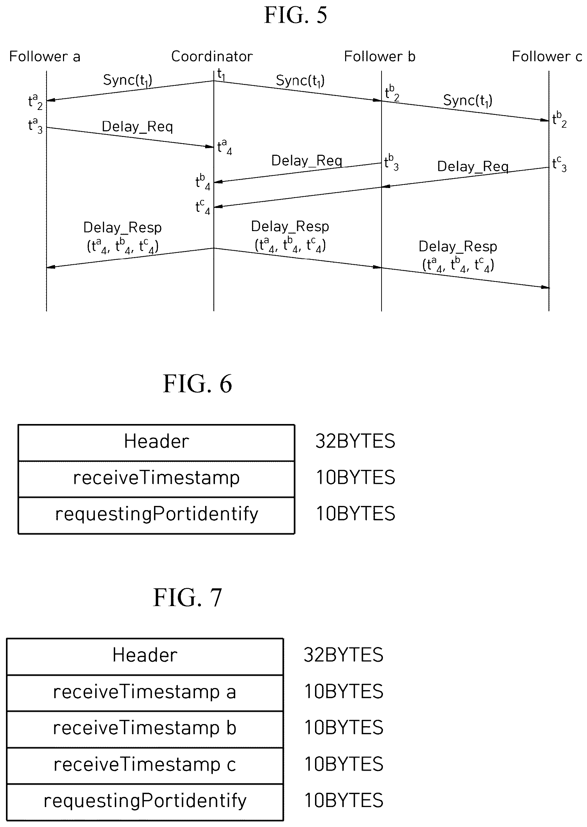

As shown in FIG. 5, a detailed protocol is described below.

(1) A coordinator transmits a Sync message at a time $t_1$. The Sync message may include transmission time information $t_1$.

(2) The transmission by the coordinator is broadcast to all followers (Follower a, Follower b, and Follower c) in a network and received at each time $t^a_2$, $t^b_2$, and $t^c_2$ after each transmission delay in accordance with a distance from the terminal. At this time, each follower (Follower a, Follower b, and Follower c) may be aware of and store the transmission time information $t_1$ included in the Sync message and reception time information $t^a_2$, $t^b_2$, or $t^c_2$ at which the Sync message has arrived at the follower itself.

(3) Each follower (Follower a, Follower b, and Follower c) that receives the Sync message transmits a Delay_Req message at each time $t^a_3$, $t^b_3$, or $t^c_3$. Each follower (Follower a, Follower b, and Follower c) may be aware of and store the time $t^a_3$, $t^b_3$, or $t^c_3$ at which the Delay_Req message is transmitted by the follower itself.

(4) The Delay_Req message transmitted by each follower (Follower a, Follower b, and Follower c) arrives at the coordinator at each time $t^a_4$, $t^b_4$, or $t^c_4$ after each transmission delay in accordance with the distance. The coordinator is aware of and stores the times $t^a_4$, $t^b_4$, and $t^c_4$.

As described above, all nodes including a coordinator and connected to a network are aware of the order of transmission, and thus the coordinator can be aware of which follower has sent a Delay_Req in accordance with the order of received Delay_Req messages.

After operations (1) to (4), the coordinator is aware of the transmission time $t_1$ of the Sync message and the times $t^a_4$, $t^b_4$, and $t^c_4$ at which the 3 Delay_Req messages have been received, and each follower is aware of the transmission time $t_1$ of the Sync message included in the Sync message, the time $t^a_2$, $t^b_2$, or $t^c_2$ at which the follower has received the Sync message, and the time $t^a_3$, $t^b_3$, or $t^c_3$ at which the follower has transmitted the Delay_Req message.

Accordingly, when the transmission time $t_1$ of the Sync message and the time $t^a_4$, $t^b_a$, or $t^c_4$ at which the Delay_Req message has been received are received from the coordinator, each follower may calculate an offset and a delay according to the PTP scheme.

Therefore, (5) when the Delay_Req message is received from each follower (Follower a, Follower b, and Follower c), the coordinator broadcasts a single Delay_Resp message including the time information $t^a_4$, $t^b_4$, and $t^c_4$.

(6) Each follower that receives the Delay_Resp message broadcast by the coordinator may calculate an offset which is a difference between its own clock and a master clock from the time information $t^a_4$, $t^b_4$, and $t^c_4$, and a delay which is a transmission delay, and perform time synchronization on the basis of the coordinator's clock.

However, to use the scheme of exemplary embodiment 2-2, it is necessary to allow a plurality of pieces of time information to be input to the Delay_Resp message. Since a conventional Delay_Resp message is sent in response to a Delay_Req message of each follower on a one-to-one basis, transmitting reception time information of a plurality of Delay_Req messages together is not taken into consideration in a conventional Delay_Resp message format.

In order for the coordinator to include the reception time information $t^a_4$, $t^b_4$, and $t^c_4$ of the Delay_Req messages in the Delay_Resp message and transmit the Delay_Resp message, first, it is necessary to store the time information $t^a_4$, $t^b_4$, and $t^c_4$ at which each Delay_Req message has been received. According to one available method, when the coordinator receives a Delay_Req message, the coordinator reads and stores a timestamp of a time point at which the Delay_Req message has been received, stored in, for example, an IEEE 1588 physical layer (PHY) transceiver. The coordinator distinguishably stores and manages each piece of the Delay_Req reception time information of all the followers.

In the case of a multi-drop network, a transmission order of participating terminals is frequently determined in advance. Therefore, according to an exemplary embodiment, it is assumed that a transmission order of nodes including a coordinator and a plurality of followers is determined in advance.

According to an exemplary embodiment, it is assumed that a transmission order of all the followers, such as follower a → follower b → follower c, is known in advance by all the network nodes, and in this case, all the nodes are aware of which follower is a transmitting entity of a specific time point or whether the coordinator is the transmitting entity. Therefore, even without an identifier of a transmitting entity of each Delay_Req message, the coordinator can determine which follower has sent the Delay_Req message on the basis of an order of arrival of Delay_Req messages.

When Delay_Req messages are received from all the followers, the coordinator includes the reception time information $t^a_4$, $t^b_4$, and $t^c_4$ of all the Delay_Req messages in the Delay_Resp message and broadcasts the Delay_Resp message.

Meanwhile, each follower (Follower a, Follower b, and Follower c) has to determine which one of the pieces of time information $t^a_4$, $t^b_4$, and $t^c_4$ included in the received Delay_Resp message is a reception time of the Delay_Req message transmitted by the follower itself. Therefore, when the coordinator includes the reception time information $t^a_4$, $t^b_4$, and $t^c_4$ of the Delay_Req messages in the Delay_Resp message and broadcasts the Delay_Resp message, the coordinator stores the reception time information $t^a_4$, $t^b_4$, and $t^c_4$ in a predetermined transmission order of the followers and transmits the Delay_Resp message.

FIG. 6 shows a format of a Delay_Resp message according to the related art, and FIG. 7 shows a format of a Delay_Resp message according to the present invention. FIG. 7 shows that the reception time information $t^a_4$, $t^b_4$, and $t^c_4$ of the Delay_Req messages at the coordinator is included in the transmission order of the followers.

Each follower that receives the Delay_Resp message in the format shown in FIG. 7 may be aware of a reception time of the Delay_Req message transmitted by the follower itself at the coordinator on the basis of its turn of transmission.

According to a modified embodiment, each follower may include and transmit its identifier in the Delay_Req message. In this case, even when the transmission order of followers is not determined or the coordinator is not aware of the transmission order of the followers, the coordinator can determine which Delay_Req message has been transmitted by which follower. The coordinator stores an identifier of a follower that has transmitted a corresponding Delay_Req message in a stored timestamp and includes reception times of Delay_Req messages and identifiers together in the Delay_Resp message to broadcast the Delay_Resp message.

Each follower that receives the broadcast Delay_Resp message may be aware of the reception time $t^a_4$, $t^b_4$, or $t^c_4$ of the Delay_Req messages transmitted by the follower itself from an included identifier.

In exemplary embodiment 2-2, since a PTP coordinator does not have to send a Sync message and a Delay_Resp message to each follower, it is possible to save the corresponding transmission bandwidth for the Sync message and the Delay_Resp message.

For example, in the case of a 10BASE-T1S environment (a total of 8 terminals share one bus), the number of PTP messages is compared between the related art and exemplary embodiment 2-2. According to the related art, a Sync message, a Delay_Req message, and a Delay_Resp message are exchanged with 7 followers, and thus 21 messages are transmitted and received. On the other hand, according to improved embodiment 2-2, one Sync message and one Delay_Req message are broadcast to all the followers, and thus the total number of messages is 9 (one Sync message + 7 Delay_Req messages + 1 Delay_Resp message).

According to the configuration of exemplary embodiment 2-2, time synchronization is possible using only 38.1% of a transmission band occupied by PTP messages for time synchronization according to the related art.

<Exemplary embodiment 2-3>

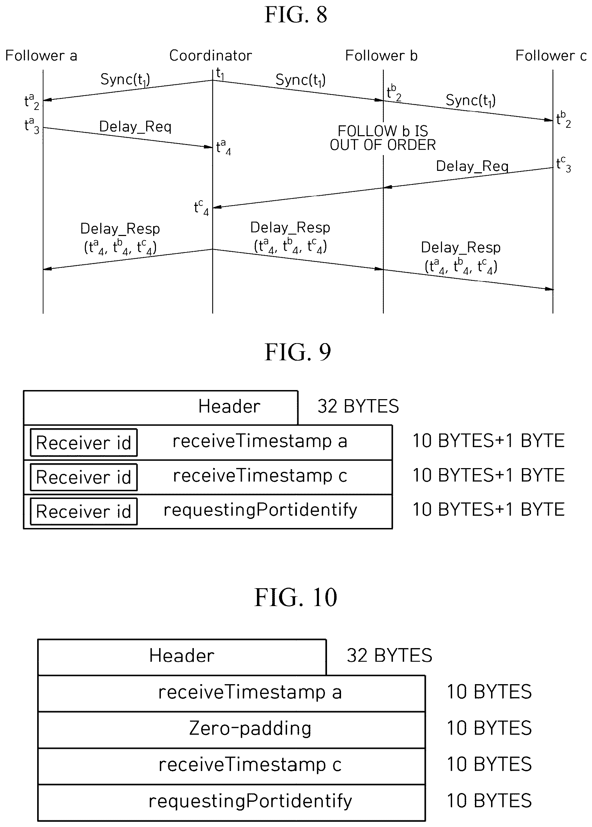

FIG. 8 is a sequence diagram illustrating an exceptional situation of exemplary embodiment 2.

A coordinator has to receive a Delay_Req message from all followers, but indefinite waiting is not allowed. Accordingly, the coordinator is set to wait for Delay_Req messages only for a predetermined time. Therefore, when no Delay_Req message is received for the predetermined time, this is considered an exceptional situation, which requires a countermeasure. In this case, it is necessary to exclude reception time information $t_4$ of a corresponding follower's Delay_Req message from a Delay_Resp message. However, as shown in FIG. 6, this is not taken into consideration in the Delay_Resp message format according to the related art because a Delay_Resp message is sent in response to a Delay_Req message on a one-to-one basis.

As shown in FIG. 7, since reception time information of Delay_Req messages transmitted by a plurality of followers are included in the Delay_Resp message according to exemplary embodiment 2 of the present invention, a method of identifying an owner (a follower that has transmitted a Delay_Req message) of receiveTimestamp($t_4$) is necessary. Exemplary embodiment 2-3 relates to processing of such an exception.

There are two approaches. First, an identifier of a follower that has transmitted a Delay_Req message (i.e., an owner of receiveTimestamp) is added to a Delay_Resp message and sent. In this case, when a Delay_Req message is not sent as indicated by Follower b in FIG. 8 or when Follower b transmits a Delay_Req message but the coordinator cannot receive the Delay_Req message, time information of Follow b may be omitted from the Delay_Resp message (see FIG. 9).

Second, a follower may be indicated using a preset fixed order. In other words, when a transmission order of all nodes or all followers in a network is set in advance, arrival time information $t_4$ of a Delay_Req message is included in a Delay_Resp message in the order. Here, in the exceptional situation of FIG. 8, the Delay_Resp message in which a meaningless value (e.g., a zero-padding) is included at a turn of a follower estimated not to have sent a Delay_Req message (Follow b in FIG. 8) is broadcast (see FIG. 10).

In this case, Follower b estimated to have a problem does not obtain the time information $t_4$ even when the Delay_Resp message is received. Accordingly, neither a delay nor an offset is calculated, and time synchronization is not possible. On the other hand, Follower a and c that receive the broadcast Delay_Resp message calculate delays and offsets to perform time synchronization.

In other words, even when some followers in a network are out of order, it is possible to perform time synchronization of the overall network without any bad effect on time synchronization of other followers through the exception handling method of Exemplary embodiment 2-3.

<Exemplary embodiment 3>

Exemplary embodiment 3 is a method of performing PTP messaging most efficiently in a multi-drop network in which one coordinator and a plurality of followers participate. According to this method, not only the number of PTP messages is reduced, but also the transmission volume required for PTP messaging is remarkably reduced using 5-bit or 10-bit symbols rather than long frames, such as Ethernet frames, as PTP messages.

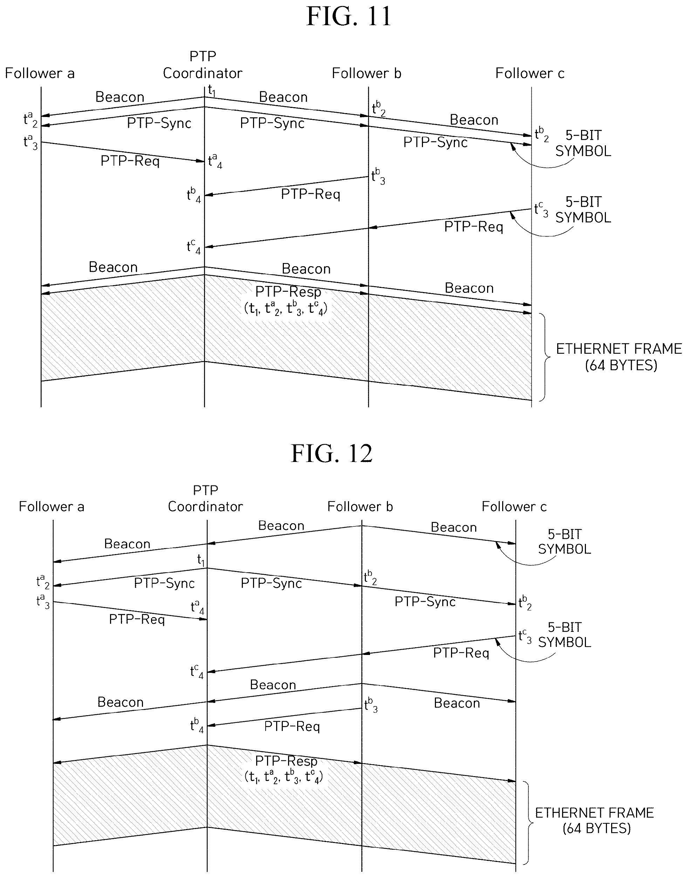

Exemplary embodiment 3 according to the technical spirit of the present invention will be described below with reference to FIGS. 11 and 12. To aid in understanding and facilitate description, an example of application to a 10BASE-T1S network will be mainly described, but exemplary embodiment 3 is also applicable to other networks through modification and alteration within the technical spirit of the present invention.

Meanwhile, a maximum of 8 terminals may participate in a 10BASE-T1S network, and one master device among the 8 terminals coordinates communication of other devices. Like in a ZigBee network, the master device periodically transmits a beacon signal and coordinates communication times between devices in the network to prevent data collision between devices. A master in a network and a master in a PTP procedure may be the same device or different devices. Accordingly, to avoid confusion, a device that transmits a Sync message will be referred to as "PTP coordinator," and other devices will be referred to as "followers" in the description of a PTP procedure like in the description of exemplary embodiments 1 and 2. However, in exemplary embodiment 3, PTP message names will be distinguished from those of exemplary embodiments 1 and 2 as PTP-Sync, PTP-Req, and PTP-Resp.

The basic idea of exemplary embodiment 3 is to transmit PTP messages using DME block coding symbols composed of 5 bits rather than Ethernet UDP packets with a minimum of 64 bytes.

A symbol table of a 10BASE-T1S standard is given as table 2 below.

[Table 2]

| Name | Symbol | 5B code | Name | Symbol | 5B code |
|---|---|---|---|---|---|
| | Quiet /Q/ | 00000 | | | 10000 |
| | | 00001 | ESDERR | Start delimiter /K/ | 10001 |
| | | 00010 | 8 | | 10010 |
| | | 00011 | 9 | | 10011 |
| SSD | Halt /H/ | 00100 | 2 | | 10100 |
| PTP-Req | | 00101 | 3 | | 10101 |
| | | 00110 | A | | 10110 |
| ESDOK/ ESDBRS(Burst) | Reset /R/ | 00111 | B | | 10111 |
| Beacon | /N/ ... /N/ | 01000 | Commit/ Sync | Start delimiter /J/ .../J/ | 11000 |
| 1 | | 01001 | ESDJAB | Set /S/ | 11001 |
| 4 | | 01010 | C | | 11010 |
| 5 | | 01011 | D | | 11011 |
| PTP-Sync | | 01100 | E | | 11100 |
| ESD/Heartbeat | End delimiter /T/ | 01101 | F | | 11101 |
| 6 | | 01110 | 0 | | 11110 |

(continued)

| Name | Symbol | 5B code | Name | Symbol | 5B code |
|---|---|---|---|---|---|
| 7 | | 01111 | Silence | Idle /I/ ... /I/ | 11111 |

Each symbol is composed of 5 bits and transmitted for 400 ns. The 5 bits have values not shown in actual data and thus may be distinguished from actual data. Each symbol is described below.

/I/: This is a symbol transmitted in an idle state. The physical coding sublayer (PCS) continuously transmits silence code (/I/). When this symbol is received, in the case of a multi-drop connection, a physical medium attachment (PMA) transmitter sets an output part of a physical medium dependent (PMD) layer in a high-impedance state to deactivate its own transmission function. In the case of a point-to-point connection, a PMA sublayer outputs a signal with a 0 V level.

/N/: This is a symbol for a beacon signal and transmitted by node 0. One beacon signal is composed of 5 /N/ symbols and transmitted for 2 $\mu$sec.

/J/: This is a Sync symbol for a commit or a first preamble byte of an Ethernet frame.

/H/: This is an SSD symbol and used as a Sync symbol for a second preamble byte of an Ethernet frame.

/T/: This is an ESD symbol and used as a first symbol marking the end of an Ethernet frame. This symbol is also used for transmitting a heartbeat signal.

/R/: This is an end-of-stream delimiter OK (ESDOK) symbol and is used as a second symbol marking the end of an Ethernet frame. This symbol is also used for burst transmission as an end-of-stream delimiter ESDBRS symbol marking the end of a unit frame in a burst.

/K/: This is an end-of-stream delimiter error (ESDERR) and is used as a second symbol marking the end of an Ethernet frame in response to a transmit error (TXERR) signal.

/S/: This is an ESD Jabber symbol. When a transmission task continues for more than a maximum transmission time (2 msec) during a transmission process, a PCS function part determines that there is a failure in its transmission part, stops the transmission, and then transmits an ESD/ESDJAB symbol to notify a receiving side that there is a problem in the frame.

Underlined codes among 5B code items in the symbol table are reserved codes that have not been defined as symbols for performing a specific function.

In exemplary embodiment 3, two of the reserved portions are used as PTP-Sync and PTP-Req. In the example of table 2, the codes "01100" and "00101" are used as a PTP-Sync symbol and a PTP-Req Symbol, respectively. Of course, other codes besides "01100" and "00101" can be used as the PTP-Sync symbol and a PTP-Req Symbol.

In this way, the length of each PTP message can be remarkably reduced, and thus it is possible to reduce transmission band occupation caused by PTP messaging for time synchronization in a network.

In addition to this, the present invention proposes a scheme for reducing the number of transmitted PTP messages to reduce transmission band occupation caused by PTP messaging.

Exemplary embodiment 3-1 of the present invention will be described with reference to FIG. 11. FIG. 11 illustrates a case where there are a 10BASE-T1S master operating as a PTP coordinator and 3 followers.

A detailed protocol is described below.

(1) A PTP coordinator transmits a Sync message at a time $t_1$. Since the 10BASE-T1S master corresponds to the PTP coordinator in exemplary embodiment 3-1 of FIG. 11, a beacon signal itself may be used as a PTP-Sync message. In other embodiments, a symbol determined as a PTP-Sync message may be transmitted immediately after a beacon signal is transmitted.

(2) The transmission by the coordinator is broadcast to all followers (Follower a, Follower b, and Follower c) in a network and received at each time $t^a_2$, $t^b_2$, and $t^c_2$ after each transmission delay in accordance with the distance from the terminal. At this time, each follower (Follower a, Follower b, and Follower c) may be aware of and store the reception time $t^a_2$, $t^b_2$, or $t^c_2$ at which the PTP-Sync message has arrived at the follower itself.

(3) Each follower (Follower a, Follower b, and Follower c) that receives the PTP-Sync message transmits a PTP-Req message at each time $t^a_3$, $t^b_3$, or $t^c_3$. Each follower (Follower a, Follower b, and Follower c) may be aware of and store the time $t^a_3$, $t^b_3$, or $t^c_3$ at which the PTP-Req messages are transmitted by each follower itself.

In 10BASE-T1S, all nodes in the network are aware of a transmission order of the participating nodes. Accordingly, even when an identifier for identifying a transmitting follower is not added to a PTP-Req message, a coordinator can determine which follower has sent the PTP-Req message in an order of arrival of PTP-Req messages.

(4) The PTP-Req message transmitted by each follower (Follower a, Follower b, and Follower c) arrives at the coordinator at each time $t^a_4$, $t^b_4$, or $t^c_4$ after each transmission delay in accordance with the distance. The coordinator is aware of and stores the times $t^a_4$, $t^b_4$, and $t^c_4$.

After operations (1) to (4), the coordinator is aware of the transmission time $t_1$ of the PTP-Sync message and the times $t^a_4$, $t^b_4$, and $t^c_4$ at which the 3 PTP-Req messages have been received, and each follower is aware of the time $t^a_2$, $t^b_2$, or $t^c_2$ at which the follower has received the PTP-Sync message and the time $t^a_3$, $t^b_3$, or $t^c_3$ at which the follower has transmitted the PTP-Req message.

Accordingly, when the transmission time $t_1$ of the PTP-Sync message and the time $t^a_4$, $t^b_4$, or $t^c_4$ at which the PTP-Req message has been received are received from the coordinator, each follower may calculate an offset and a delay according to the PTP scheme.

Therefore, (5) when the PTP-Req message is received from each follower (Follower a, Follower b, and Follower c), the coordinator broadcasts a PTP-Resp message including the time information $t_1$, $t^a_4$, $t^b_4$, and $t^c_4$ immediately after a next beacon signal is transmitted.

(6) When the PTP-Resp message including the time information $t_1$, $t^a_4$, $t^b_4$, and $t^c_4$ is received from the coordinator, each follower may calculate an offset which is a difference between its own clock and a master clock, and a delay which is a transmission delay, and perform time synchronization.

Performing time synchronization through the above procedure has the following advantages over the PTP scheme.

As a 10BASE-T1S master, the PTP coordinator periodically transmits a beacon. The PTP coordinator may use the beacon signal as a PTP-Sync message or transmit a PTP-Sync message immediately after the beacon signal is transmitted. In any case, offset calculation for time synchronization can be completed during 2 beacon periods.

In a 10BASE-T1S environment in which a maximum of 8 terminals share one bus, a bandwidth can be remarkably saved compared to the scheme of the related art, and more precise time synchronization is possible.

Since only the PTP-Resp message including the time information $t_1$, $t^a_4$, $t^b_4$, and $t^c_4$ among PTP messages uses an Ethernet frame, there is a great effect on bandwidth saving.

Bandwidth occupancy of the PTP messaging scheme of exemplary embodiment 3 and the PTP messaging scheme of the related art is compared below.

The PTP messaging scheme of the related art requires at least 3 Ethernet frames. When the minimum length of an Ethernet frame (64 bytes) is applied to a case where a PTP coordinator and one follower exchange PTP messages, a data length of 3 Ethernet frames is 1,536 ($64 \times 8 \times 3$) bits. When a maximum of 8 devices (one PTP coordinator and 7 followers) that may participate in the same bus are connected in a 10BASE-T1S network and perform time synchronization, 10,752 bits are required. This is a length excluding header data, such as preambles, etc., of frames.

In the scheme according to exemplary embodiment 3 of the present invention, the information ($t_1$, $t^a_4$, $t^b_4$, and $t^c_4$) required for time synchronization calculation is transmitted through the PTP-Resp message. Unlike the scheme of the related art, only one Ethernet frame is required.

When a maximum of 8 devices (one PTP coordinator and 7 followers) of terminals that may participate in the same bus are connected in a 10BASE-T1S network and perform time synchronization, only one (PTP-Resp) of PTP messages is an Ethernet frame (64 bytes = 512 bits), and in addition to this, one PTP-Sync message and a maximum of 7 PTP-Req messages composed of a 5-bit symbol are required. In other words, 552 bits (512 bits + 40 bits) are required. Therefore, time synchronization is possible using only 5.13% of the bandwidth required for the related art.

FIG. 12 is a diagram illustrating a PTP messaging sequence according to exemplary embodiment 3-2 of the present invention. While exemplary embodiment 3-1 of FIG. 11 is a case where a 10BASE-T1S master and a PTP coordinator are the same, exemplary embodiment 3-2 is a case where a 10BASE-T1S master and a PTP coordinator are different. Exemplary embodiment 3-2 is the same as the procedure described in exemplary embodiment 1 except that the PTP coordinator does not use a beacon as a PTP-Sync message.

In other words, the coordinator transmits a symbol determined as a PTP-Sync message immediately after the master transmits a beacon, and transmits time information $t_1$ and $t_4$ through a PTP-Resp message at a next beacon period such that each follower (Follower a, Follower b, and Follower c) may be aware of time information $t_1$, $t_2$, $t_3$, and $t_4$ and calculate an offset.

Even in exemplary embodiment 3-2 in which the PTP coordinator and the 10BASE-T1S master are different, offset calculation for time synchronization can be completed during 2 periods. Here, in exemplary embodiment 3-2 in which the PTP coordinator and the 10BASE-T1S master are different, it may take 2 periods for all the followers to transmit PTP-Req messages, while in exemplary embodiment 3-1, all the followers transmit all PTP-Req messages to the PTP coordinator in 1 period. However, since PTP messaging can be completed within 2 periods, the two exemplary embodiments have substantially the same effect of saving a transmission bandwidth.

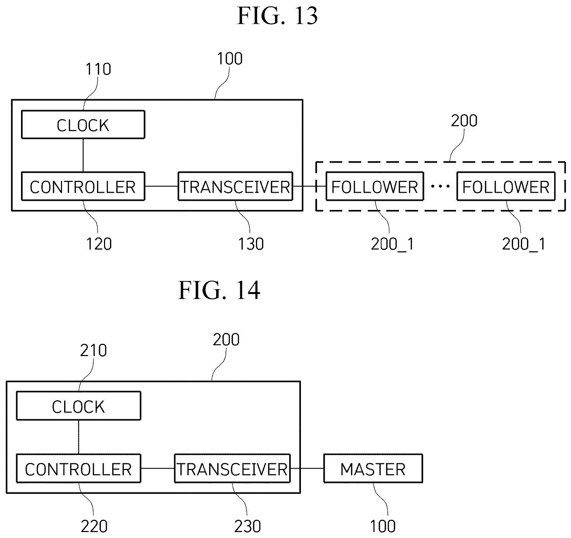

Configurations and operations of a PTP coordinator and a follower will be described below with reference to FIGS. 13 and 14.

FIG. 13 is a diagram showing an internal configuration of a PTP coordinator 100. To facilitate description and aid in understanding, components irrelevant to the technical spirit of the present invention are omitted, and only components that are used for time synchronization are shown.

The coordinator 100 includes a clock 110, a controller 120 that performs the above-described PTP messaging, and a transceiver 130 that exchanges PTP messages with one or more followers 200_1, ..., and 200_n in accordance with an instruction of the controller 120.

The clock 110 of the coordinator 100 serves as a master clock in a network.

The controller 120 performs operations carried out by the coordinator 100 among the above-described operations (1) to (6).

In other words, the controller 120 of the coordinator 100 controls the transceiver 130 to transmit a PTP-Sync message at a time $t_1$. A beacon signal may be used as a PTP-Sync message, or a symbol determined as a PTP-Sync message is transmitted immediately after a beacon signal is transmitted.

Subsequently, when a PTP-Req message (a 5-bit symbol) transmitted at each time $t^a_3$, $t^b_3$, or $t^c_3$ by each of the followers 200_1, ..., and 200_n that receives the PTP-Sync message is received through the transceiver 130, the controller 120 is aware of and stores reception times $t^a_4$, $t^b_4$, and $t^c_4$ of the PTP-Req messages.

When the PTP-Req messages are received from all the followers 200_1, ..., and 200_n in the network, a PTP-Resp message (an Ethernet frame) including the time information $t_1$, $t^a_4$, $t^b_4$, or $t^c_4$ is broadcast immediately after a next beacon signal is transmitted.

FIG. 14 is a diagram showing an internal configuration of a PTP follower 200. To facilitate description and aid in understanding, components irrelevant to the technical spirit of the present invention are omitted, and only components that are used for time synchronization are shown.

The follower 200 includes a clock 210, a controller 220 that performs the above-described PTP messaging, and a transceiver 230 that exchanges PTP messages with the coordinator 100 in accordance with an instruction of the controller 220.

The clock 210 of the follower 200 provides a reference time point for an operation of each component in the follower 200.

The controller 220 of the follower 200 performs operations carried out by the follower 200 among the above-described operations (1) to (6).

In other words, when a PTP-Sync message (a beacon signal or a 5-bit symbol) broadcast to all the followers 200_1, ..., and 200_n in the network is received through the transceiver 230, the controller 220 is aware of and stores a reception time $t^a_2$, $t^b_2$, or $t^c_2$.

Subsequently, the controller 220 instructs the transceiver 230 to transmit a PTP-Req message (a 5-bit symbol) to the coordinator 100 at a time $t^a_3$, $t^b_3$, or $t^c_3$ and stores the transmission time $t^a_3$, $t^b_3$, or $t^c_3$.

Through the above process, the controller 220 is aware of and stores the reception time $t^a_2$, $t^b_2$, or $t^c_2$ at which the PTP-Sync message has been received, and the time $t^a_3$, $t^b_3$, or $t^c_3$ at which the controller 220 has transmitted the PTP-Req message.

Subsequently, the controller 220 receives the PTP-Resp message (the Ethernet frame) including the PTP_Sync transmission time $t_1$, and the times $t^a_4$, $t^b_4$, and $t^c_4$ at which the PTP_Req messages transmitted by the followers 200_1, ..., and 200_n in the network have been received by the coordinator 100, from the coordinator 100 through the transceiver 230.

The controller 220 of each follower may calculate an offset which is a difference between its own clock 210 and the master clock 110 and a delay which is a transmission delay on the basis of the time information $t^a_2$, $t^b_2$, or $t^c_2$ and time information $t^a_3$, $t^b_3$, or $t^c_3$ stored therein and the time information $t_1$, $t^a_4$, $t^b_4$, and $t^c_4$ included in the PTP-Resp message and performs time synchronization.

Meanwhile, in the above description, the coordinator 100 and the follower 200 have been described on the basis of exemplary embodiment 3. However, it is apparent to those of ordinary skill in the art that the coordinator 100 and the follower 200 according to the present invention may be configured to perform the method performed in exemplary embodiment 1 and exemplary embodiment 2.

In other words, detailed description will be omitted to avoid redundancy, but the coordinator 100 and the follower 200 disclosed in FIGS. 13 and 14 may perform the method of exemplary embodiment 1 and the method of exemplary embodiment 2.

<Exemplary embodiment 4>

This embodiment relates to a coding scheme (4B5B, 8B10B, etc.) for performing PTP messaging using a variable-length symbol (e.g., a 5-bit, 10-bit, etc.) rather than a network frame.

In cases where a 5-bit symbol is determined in advance, such as 10BASE-T1S standards, some of the symbols reserved in the standard can be used as PTP messages. However, in order to actually use other bits symbols as PTP messages in a point-to-point configuration using an Ethernet switch or in other various topologies, the block coding method of Example 4 is required.

In networking, control symbols are defined in advance and used like in 10BASE-T1S in many cases. In this case, a common standard is set, and based on this, several network entities are highly compatible with each other. However, it is often difficult to make full use of advantages in each configuration of various applications, and there is also vulnerability in terms of security.

For example, to efficiently use a transmission band in PTP messaging for time synchronization, it is efficient to perform PTP messaging using symbols with a length that is several bits shorter than a network frame with a long length (e.g., the minimum length of an Ethernet frame is 64 bytes). When a 5-bit symbol standard and its use are determined in advance in a symbol table like 10BASE-T1S, some reserved symbols in the standard may be used as PTP messages.

However, in the case of configuring a point-to-point connection with an Ethernet switch interposed or using a symbol of 5 bits, 10 bits, etc., as a PTP message in various other topologies, it is difficult to use fixed bits symbols which are unchangeable.

In addition, when standardized fixed symbols are used in a high-security network, there is a problem in that signals are easily interpreted.

Therefore, a variable block coding device and method are required for a user to easily edit and set network symbols.

In other words, a fixed symbol table is used in 4B5B (or 8B10B) of Ethernet according to the related art. To develop a more flexible system, it is necessary to allow a user to edit and set the symbol table.

According to exemplary embodiment 4, it is possible to build a communication system that is more flexible and has enhanced security by allowing editing of symbols used in 4B5B (8B10B).

Since the fixed table can be edited, when a user changes the table, only nodes that are accurately aware of the table can communicate with each other, which enhances security.

When symbols of the table are edited at locations in different digital signal environments in accordance with a cable installation environment or a system state, performance can be improved.

As described above, block coding (bit transmission encoding) such as 4B5B, 5B6B, and 8B10B, is used to reduce power consumption and facilitate signal restoration by removing DC components of digital signals.

Regarding exemplary embodiment 4, the inventor of the present invention pays attention to the fact that a symbol table is fixed for each network standard according to the related art. Changing the symbol table may be beneficial. The largest benefit is that security can be enhanced. For example, communication security can be ensured by providing multiple symbol tables and changing a symbol table in use. This is because a system without the symbol table information cannot communicate.

When a part for processing symbols is developed as an analog circuit, it may be difficult to change the part. However, when symbols are used in a digital chip, the symbols can be edited without any problem.

Also, when a specific bit pattern shows a different characteristic depending on an environment in which a cable is installed, it is possible to provide a communication environment with higher performance by modifying the symbol translation table.

For example, in a 4B5B block coding table, 000b (a binary number) is transmitted as 11110b (a binary number). The above-described table 2 is a 4B5B translation table used in 10BASE-T1S. The underlined portions are unused bit patterns.

In exemplary embodiment 4, 01100b, 00110b, etc., may be used instead of 11110b. Also, bit patterns of data may be exchanged and utilized as a cipher table. A beacon signal utilizes 01000b as a bit pattern but may utilize 10000b.

However, in all current Ethernet transceiver chips, such translation information is fixed and unchangeable due to the standard. It is important in terms of compatibility. However, in some specific environments, security is more important than compatibility.

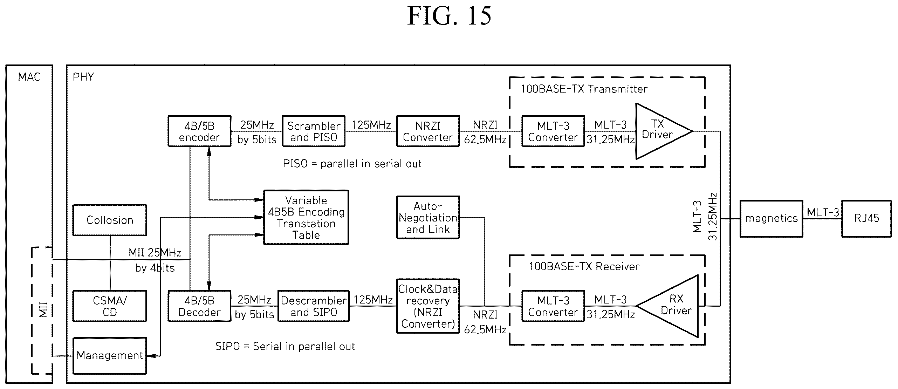

FIG. 15 is an internal block diagram of a PHY chip employing 4B5B according to the present invention. The 4B5B encoder and the 4B5B decoder of FIG. 15 are the same as those of the related art in that they are on-chip circuitry translating 4-bit data into 5-bit symbols and translating 5-bit symbols into 4-bit data, except that a symbol translation table in FIG. 15 is variable.

The key point of exemplary embodiment 4 is to allow this circuitry to perform a translation function by referring to translation information in a variable 4B5B encoding translation table (see the double solid line).

The variable 4B5B encoding translation table of exemplary embodiment 4 can be checked and modified by a user using a software management data input/output (MDIO) interface. For example, in addition to a data channel of a media independent interface (MII) interface, there is an MDIO interface for checking a register in the PHY chip and memory information, and it is possible to access and modify the variable encoding translation table through the interface (see the thick broken line).

Meanwhile, according to not only 4B5B block coding but also 8B10B block coding, etc., encoding and decoding may be performed using the same variable table.

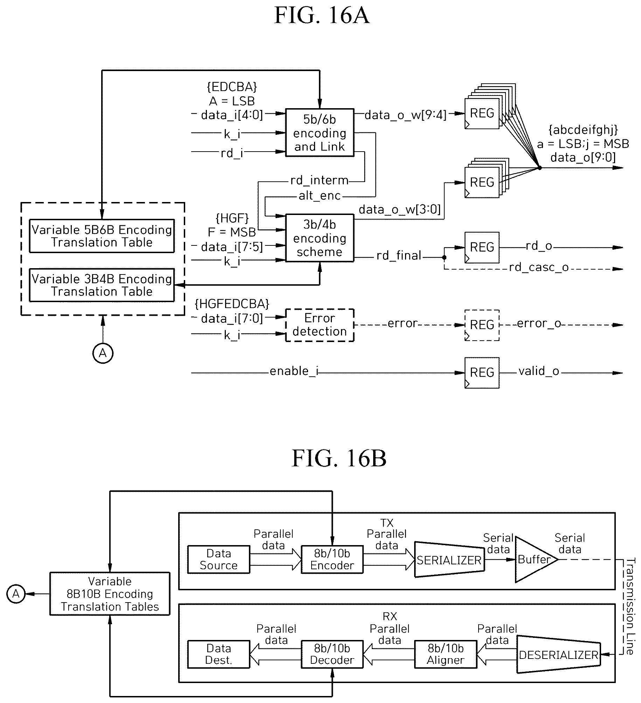

FIG. 16A and B show an example of 8B10B block coding. In this case, a corresponding configuration is divided into 5B6B and 3B4B, and thus an 8B10B translation table has to include the two kinds of tables.

In addition to 8B10B block coding, data-symbol block coding of various bits, such as 6B8B, 10B12B, etc., is possible.

**EP 4 769 984 A1**

As shown in FIG. 16A and B, a method of performing variable block coding in a network transceiver using two or more translation tables includes an operation of providing a first variable translation table that is editable and includes the correspondences between A-bit data and B-bit symbols (A and B are natural numbers of 1 or more, A < B), an operation of providing a second variable translation table that is editable and includes the correspondences between C-bit data and D-bit symbols (C and D are natural numbers of 1 or more, C < D), an operation of accessing and editing the first and second variable translation tables through a management interface, an operation of combining the first variable translation table with the second variable translation table to generate a third variable translation table, and an operation of performing block coding (A+C)-bit data into a (C+D)-bit symbol by referring to the third variable translation table.

For example, an 8B10B translation table may be generated by combining a 5B6B translation table with a 3B4B translation table, and 8-bit data may be block-coded into a 10-bit symbol.

The network transceiver that performs such variable block coding includes the first variable translation table for mapping A-bit data to B-bit symbols (A and B are natural numbers of 1 or more, A < B) on a one-to-one basis, the second variable translation table for mapping C-bit data to D-bit symbols (C and D are natural numbers of 1 or more, C < D) on a one-to-one basis, the management interface that enables a user to access, edit, and set the first and second variable translation tables, the third variable translation table generated by combining the first and second variable translation tables, and an encoder that converts data into a symbol by referring to the third variable translation table.

The network transceiver may further include a transmitter that transmits an output of the encoder, a receiver that receives a signal including a symbol from a network, and a decoder that converts the received symbol into data by referring to the third variable translation table.

As described above, when symbol conversion coding is flexibly performed in exemplary embodiments 1 to 3, it is possible to improve efficiency in PTP messaging while performing PTP messaging using an independent symbol irrespective of existing telecommunication standards.

In addition, even when a specific standard is assumed like in exemplary embodiment 3, not only are reserved symbols used, but also other bit symbols (e.g., 6-bit symbols, 10-bit symbols obtained through 5B6B translation or 8B10B translation, or symbols with a larger number of bits) can be used.

In this case, PTP messaging may have great flexibility and efficiency.

For example, in exemplary embodiments 1 to 3, each follower (Follower a, Follower b, and Follower c) has to determine which one of the pieces of time information $t^a_4$, $t^b_4$, and $t^c_4$ that are transmitted together in one Delay_Resp message by the coordinator is reception time information of the Delay_Req message transmitted by the follower itself.

In addition, the coordinator has to determine which follower has transmitted each received Delay_Req message. When the coordinator determines which follower has transmitted a PTP-Req message, the correct time information $t^a_4$, $t^b_4$, and $t^c_4$ can be obtained, and then the coordinator can broadcast information for clearly distinguishing a reception time $t^a_4$, $t^b_4$, or $t^c_4$ of each PTP-Req message transmitted by each follower to the followers.

To this end, as described above in exemplary embodiments 1 to 3, all followers in a network perform transmission in a predetermined order, and all nodes in the network have to be aware of the transmission order, or an identifier of a corresponding follower has to be included in or concatenated to a Delay_Req message and each piece of the time information $t^a_4$, $t^b_4$, and $t^c_4$ c.

According to the variable coding scheme of exemplary embodiment 4, it is possible to include an identifier of a follower using a symbol with a very small number of bits.

For example, an identifier of a follower may be concatenated to a PTP-Req message (a 5-bit symbol), and the PTP-Req message may be sent together with the identifier. Since a maximum of 8 terminals may be connected in a 10BASE-T1S network, each follower may be distinguished using a 3-bit identifier. Even in a network in which a larger number of nodes are connected, enough bits to identify all connected followers may be added such that each follower that has transmitted a Delay_Req message can be identified using 4 bits, 5 bits, or the like.

When an identifier is included in a Delay_Req message in an existing manner in exemplary embodiments 1 to 3, it is necessary to use an existing network frame (e.g., an Ethernet frame with at least 64 bytes, etc.), which greatly reduces the efficiency of PTP messaging proposed by the present invention. Here, exemplary embodiment 4 makes flexible and efficient PTP messaging possible using only a few bits.

In other words, the configuration of exemplary embodiment 4 allows the above-described exemplary embodiments 1 to 3 to be applied to various networks for universal use.

It is to be clearly noted that, while some embodiments of the present specification focus on the application of variable block coding in PTP-based efficient time synchronization for the sake of understanding, uses and applications of the variable block coding device and method according to the present invention are not limited thereto, and various applications and utilizations are possible.

Detailed configurations will be summarized below according to each of the above-described aspects of the present invention.

An exemplary embodiment discloses a method of performing time synchronization on the basis of a PTP scheme in a network in which a coordinator and a plurality of followers are connected, the method including an operation in which the coordinator broadcasts one Sync message, an operation in which the plurality of followers receiving the Sync message store reception times $t_2$ of the Sync message, an operation in which the coordinator receiving Req messages from each of the plurality of followers transmits a Resp message including a transmission time $t_1$ of the Sync message and reception times $t_4$ of the Req messages to each of the plurality of followers, an operation in which each of the plurality of followers receiving the transmission time $t_1$ of the Sync message and the reception times $t_4$ of the Req messages calculates a time offset between the follower and the coordinator, and an operation in which the plurality of followers perform time synchronization with the coordinator on the basis of the time offsets.

Through modification of some elements, a method of performing time synchronization on the basis of a PTP scheme in a network in which a coordinator and a plurality of followers are connected includes an operation in which the coordinator broadcasts a Sync message, an operation in which the plurality of followers receiving the Sync message store reception times $t_2$ of the Sync message, an operation in which the coordinator receiving Req messages from each of the plurality of followers broadcasts one Resp message including a transmission time $t_1$ of the Sync message and reception times $t_4$ of the Req messages, an operation in which each of the plurality of followers receiving the transmission time $t_1$ of the Sync message and the reception times $t_4$ of the Req messages calculates a time offset between the follower and the coordinator, and an operation in which the plurality of followers perform time synchronization with the coordinator on the basis of the time offsets.

The operation of broadcasting the Sync message may include an operation of storing the transmission time $t_1$ of the Sync message.

The operation of transmitting the Req messages may include an operation of storing transmission times $t_3$ of the Req messages.

The operation of broadcasting the Resp message may include an operation in which the coordinator stores one or more times $t_4$ at which the Req messages have been received, an operation in which the coordinator includes the one or more times $t_4$ in an Ethernet frame, and an operation in which the coordinator broadcasts the Ethernet frame as the Resp message.

Alternatively, the operation of broadcasting the Resp message may include an operation of generating a Resp message including a plurality of identifiers of each of the plurality of followers and the reception times of the Req messages transmitted by each of the followers in pairs of an identifier and a reception time and an operation of broadcasting the Resp message.

When Req messages are not received from some of the plurality of followers for a certain time or more, a Delay-Resp message is generated excluding Req arrival times $t_3$ of the corresponding followers.

The operation of broadcasting the Resp message may include an operation of generating the Resp message by determining an order of the followers in advance and arranging reception times of the Req messages transmitted by the followers in the order and an operation of broadcasting the Resp message.

In the operation of generating the Resp message, when Req messages are not received from some of the plurality of followers for a certain time or more, a Delay-Resp message may be generated by zero-padding data corresponding to turns of the corresponding followers.

A time synchronization system for performing PTP-based time synchronization in a network is disclosed, the time synchronization system including a PTP coordinator including a clock configured to function as a master clock in a network, a controller configured to perform PTP messaging using symbols, and a transceiver configured to transmit and receive PTP messages to and from one or more followers in accordance with an instruction of the controller, and a PTP follower including a clock configured to provide a reference time point for operations of internal components, a controller configured to perform PTP messaging using symbols, and a transceiver configured to transmit and receive PTP messages to and from the coordinator in accordance with an instruction of the controller.

An exemplary embodiment discloses a method of performing time synchronization on the basis of a PTP scheme in a network in which a coordinator and followers are connected in a point-to-point fashion, the method including an operation in which the coordinator transmits a symbol rather than a network frame as a Sync message, an operation in which the followers receiving the Sync message store reception times $t_2$ of the Sync message, an operation in which the followers transmit symbols other than the symbol as Req messages, an operation in which the coordinator receiving the Req messages transmits a network frame including a transmission time $t_1$ of the Sync message and reception times $t_4$ of the plurality of Req messages as a Resp message, an operation in which the followers receiving the transmission time $t_1$ of the Sync message and the reception times $t_4$ of the Req messages calculate time offsets between the followers and the coordinator, and an operation in which the plurality of followers perform time synchronization with the coordinator on the basis of the time offsets.

The operation of transmitting the Sync message may include an operation of broadcasting a symbol predefined as the Sync message.

The operation of transmitting the Req messages may include an operation of transmitting a symbol predetermined as the Req messages.

The operation of transmitting the Req messages may include an operation of storing transmission times $t_3$ of the

Req messages.

The operation of transmitting the Sync message may include an operation of storing the transmission time $t_1$ of the Sync message.

The operation of transmitting the Resp message may include an operation of storing the times $t_4$ at which the coordinator has received the Req messages, an operation of including the time $t_1$ and the times $t_4$ in an Ethernet frame, and an operation of transmitting the Ethernet frame as the Resp message.

According to an exemplary embodiment, a PTP coordinator for performing PTP-based time synchronization in a network is disclosed, which includes a clock configured to function as a master clock in a network, a controller configured to perform control such that a Sync message is transmitted using a symbol and a Resp message is transmitted using an Ethernet frame, and a transceiver configured to transmit the Sync message and the Resp message to followers and receive Req messages transmitted by the followers in accordance with an instruction of the controller.

The symbol may be a symbol converted using at least one block coding scheme between 4B5B and 8B10B.

A PTP follower for performing PTP-based time synchronization in an Ethernet network is disclosed, the PTP follower including a clock configured to provide a reference time point for operations of internal components, a controller configured to perform PTP messaging using a symbol, and a transceiver configured to transmit and receive PTP messages to and from a coordinator in accordance with an instruction of the controller.

When the Sync message is received through the transceiver, the controller is aware of and stores a reception time $t_2$, transmits a Req message configured with the symbol, and stores a transmission time $t_3$ of the Req message, and when a transmission time $t_1$ of the Sync message and a time $t_4$ at which the Req messages have arrived at the coordinator are received from the coordinator, the controller calculates an offset between the PTP follower and the coordinator on the basis of the time $t_1$, the time $t_2$, the time $t_3$, and the time $t_4$ and performs time synchronization with the coordinator on the basis of the offset.

According to an exemplary embodiment, a method of performing variable block coding in a network transceiver is disclosed, the method including an operation of providing an editable variable translation table to the transceiver, an operation of accessing the variable translation table through a management interface, an operation of editing data-symbol correspondences in the variable translation table, and an operation in which the encoder of the network transceiver performs block coding on data to be transmitted by referring to the variable translation table.

The variable translation table may be accessed through an MDIO interface.

The operation of editing the data-symbol correspondences in the variable translation table may include an operation of mapping different B-bit symbols to one or more A-bit data on a one-to-one basis (A and B are natural numbers of 1 or more, A < B).

According to an exemplary embodiment, a network transceiver for performing variable block coding is disclosed, the network transceiver including a variable translation table in which data-symbol correspondences are stored, a manager interface configured to enable a user to access, edit, and set the variable translation table, an encoder configured to convert data into a symbol by referring to the variable translation table, a transmitter configured to transmit an output of the encoder, a receiver configured to receive a signal including a symbol from a network, and a decoder configured to convert the received symbol into data by referring to the variable translation table.

The management interface may be an MDIO interface defined in the IEEE 802.3 standard.

According to an exemplary embodiment, a method of performing variable block coding in a network transceiver is disclosed, the method including an operation of providing a first variable translation table that is editable and includes correspondences between A-bit data and B-bit symbols (A and B are natural numbers of 1 or more, A < B), an operation of providing a second variable translation table that is editable and includes correspondences between C-bit data and D-bit symbols (C and D are natural numbers of 1 or more, C < D), an operation of accessing and editing the first and second variable translation tables through a management interface, an operation of generating a third variable translation table by combining the first variable translation table with the second variable translation table, and an operation of performing block coding (A+C)-bit data into a (C+D)-bit symbol by referring to the third variable translation table.

In the operation of generating the third variable translation table, a 5B6B translation table and a 3B4B translation table may be combined into an 8B10B table.

The method may further include an operation of decoding a symbol received through the network into (A+C)-bit data by referring to the third variable translation table.

According to an exemplary embodiment, a network transceiver for performing variable block coding is disclosed, the network transceiver including a first variable translation table for mapping A-bit data to B-bit symbols (A and B are natural numbers of 1 or more, A < B) on a one-to-one basis, a second variable translation table for mapping C-bit data to D-bit symbols (C and D are natural numbers of 1 or more, C < D) on a one-to-one basis, a management interface configured to enable a user to access, edit, and set the first and second variable translation tables, a third variable translation table generated by combining the first and second variable translation tables, and an encoder configured to convert data into a symbol by referring to the third variable translation table.

The network transceiver may further include a transmitter configured to transmit an output of the encoder, a receiver configured to receive a signal including a symbol from a network, and a decoder configured to convert the received symbol into data by referring to the third variable translation table.

According to the present invention, transmission band occupancy in a network in which two or more devices are connected is minimized by efficiently performing time synchronization between the devices in the network, and thus it is possible to increase a data transmission rate.

Since an offset is calculated for time synchronization using symbols that have significantly shorter lengths than existing PTP messages, more precise time synchronization is possible.

Effects of the present invention are not limited to those described above, and other effects that have not been described above will be clearly understood by those of ordinary skill in the art from the above description.

The present invention has been described in detail above with reference to exemplary embodiments of the present invention. However, the above-described embodiments are merely illustrative, and various modifications and alterations, such as a combination of embodiments, are possible within the technical spirit or scope of the present invention. Therefore, the scope of the present invention should be defined by the following claims.

**Claims**

1. A method of performing time synchronization on the basis of a precise time protocol (PTP) scheme in a network in which a coordinator and a plurality of followers are connected, the method comprising:

   broadcasting, by the coordinator, one symbol as a Sync message;
   storing, by the plurality of followers receiving the Sync message, reception times ($t_2$) of the Sync message;
   transmitting, by each of the plurality of followers, a Req message;
   broadcasting, by the coordinator receiving the plurality of Req messages, one Resp message including a transmission time ($t_1$) of the Sync message and reception times ($t_4$) of the Req messages;
   calculating, by the plurality of followers receiving the transmission time ($t_1$) of the Sync message and the reception times ($t_4$) of the Req messages, time offsets between the followers and the coordinator; and
   performing, by the plurality of followers, time synchronization with the coordinator on the basis of the time offsets.

2. The method of claim 1, wherein the broadcasting of the Sync message comprises broadcasting a symbol defined as the Sync message in advance after a beacon signal is transmitted.

3. The method of claim 1 or 2, wherein the transmitting of the Req message comprises transmitting a symbol defined as the Req message in advance.

4. The method of any of claims 1 to 3, wherein the transmitting of the Req message comprises storing transmission times ($t_3$) of the Req messages.

5. The method of any of claims 1 to 4, wherein the broadcasting of the Sync message comprises storing the transmission time ($t_1$) of the Sync message.

6. The method of any of claims 1 to 5, wherein the broadcasting of the Resp message comprises:

   storing, by the coordinator, the reception times ($t_4$) of the Req messages;
   including the time ($t_1$) and the times ($t_4$) in an Ethernet frame; and
   broadcasting the Ethernet frame as the Resp message.

7. A method of performing time synchronization in a 10 megabits/second baseband signaling over a single twisted pair for short reach (10BASE-T1S) network when a master of the network is a coordinator of time synchronization based on precise time protocol (PTP), the method comprising:

   periodically broadcasting, by the coordinator, a beacon as a Sync message and storing a transmission time ($t_1$);
   storing, by one or more followers receiving the beacon, reception times ($t_2$) of the beacon;
   transmitting at times ($t_3$), by the one or more followers, Req messages;
   broadcasting, by the coordinator receiving the Req messages, one Resp message including the transmission time ($t_1$) of the beacon and reception times ($t_4$) of the Req messages; and
   calculating, by the one or more followers receiving the transmission time ($t_1$) of the Sync message and the reception times ($t_4$) of the Req messages, time offsets between the followers and the coordinator.

8. The method of claim 7, wherein the calculating of the time offsets comprises calculating the time offsets on the basis of the time ($t_1$), the times ($t_2$), the times ($t_3$), and the times ($t_4$).

9. The method of claim 8, wherein the calculating of the time offsets comprises calculating the time offsets according to an equation below:

$$Offset\ O = \frac{(t_2 - t_1) - (t_4 - t_3)}{2}.$$

10. The method of any of claims 7 to 9, further comprising performing, by the one or more followers, time synchronization between the one or more followers and the coordinator on the basis of the time offsets.

11. The method of any of claims 7 to 10, wherein the transmitting of the Req messages comprises determining one of reserved symbols among 10BASE-T1S binding, mapping, and extraction (BME) block coding symbols as the Req messages.

12. A precise time protocol (PTP) coordinator for performing PTP-based time synchronization in an Ethernet network, the PTP coordinator comprising:

a clock configured to function as a master clock in a network;
a controller configured to perform PTP messaging using symbols; and
a transceiver configured to transmit and receive PTP messages to and from one or more followers in accordance with an instruction of the controller.

13. The PTP coordinator of claim 12, wherein the symbols are reserved symbols among 10 megabits/second baseband signaling over a single twisted pair for short reach (10BASE-T1S) binding, mapping, and extraction (BME) block coding symbols.

14. The PTP coordinator of claim 12 or 13, wherein the controller controls the transceiver such that the transceiver transmits a symbol determined as a Sync message in advance at a time ($t_1$), stores reception times ($t_4$) of a symbol which is determined as a Req message when the symbol is received, generates one Resp message including the time ($t_1$) and the times ($t_4$), and broadcasts the Resp message.

15. The PTP coordinator of claim 14, wherein the controller broadcasts the Resp message using an Ethernet frame.

FIG. 1

# FIG. 2

PTP
Coordinator

PTP
Follower

$t_1$

Sync
Delay_Req

$t_2$

$t_3$

$t_4$

Delay_Resp($t_1$, $t_4$)

Sync,Delay_Req: SYMBOL
Delay_Resp: ETHERNET FRAME

## FIG. 3

## FIG. 4

## FIG. 5

Follower a          Coordinator          Follower b          Follower c

$Sync(t_1)$   $t_1$   $Sync(t_1)$

$t^a_2$   $t^b_2$   $Sync(t_1)$

$t^a_3$   Delay_Req   $t^b_2$

$t^a_4$   Delay_Req   $t^b_3$   Delay_Req   $t^c_3$

$t^b_4$

$t^c_4$

Delay_Resp   Delay_Resp
$(t^a_4, t^b_4, t^c_4)$   $(t^a_4, t^b_4, t^c_4)$

Delay_Resp
$(t^a_4, t^b_4, t^c_4)$

## FIG. 6

| Header | 32BYTES |
|---|---|
| receiveTimestamp | 10BYTES |
| requestingPortidentify | 10BYTES |

## FIG. 7

| Header | 32BYTES |
|---|---|
| receiveTimestamp a | 10BYTES |
| receiveTimestamp b | 10BYTES |
| receiveTimestamp c | 10BYTES |
| requestingPortidentify | 10BYTES |

# FIG. 8

Follower a      Coordinator      Follower b      Follower c

$Sync(t_1)$    $t_1$    $Sync(t_1)$

$t^a_2$

$Sync(t_1)$

$t^b_2$

$t^b_2$

$t^a_3$    Delay_Req

FOLLOW b IS
OUT OF ORDER

$t^a_4$

Delay_Req

$t^c_3$

$t^c_4$

Delay_Resp
$(t^a_4, t^b_4, t^c_4)$

Delay_Resp
$(t^a_4, t^b_4, t^c_4)$

Delay_Resp
$(t^a_4, t^b_4, t^c_4)$

# FIG. 9

| Header | 32 BYTES |
|---|---|

| Receiver id | receiveTimestamp a | 10 BYTES+1 BYTE |
|---|---|---|
| Receiver id | receiveTimestamp c | 10 BYTES+1 BYTE |
| Receiver id | requestingPortidentify | 10 BYTES+1 BYTE |

# FIG. 10

| Header | 32 BYTES |
|---|---|

| receiveTimestamp a | 10 BYTES |
|---|---|
| Zero-padding | 10 BYTES |
| receiveTimestamp c | 10 BYTES |
| requestingPortidentify | 10 BYTES |

# FIG. 11

# FIG. 12

## FIG. 13

110     100     200

CLOCK

CONTROLLER — TRANSCEIVER — FOLLOWER ··· FOLLOWER

120     130     200_1     200_1

## FIG. 14

210     200

CLOCK

CONTROLLER — TRANSCEIVER — MASTER

220     230     100

# FIG. 15

PISO = parallel in serial out

SIPO = Serial in parallel out

EP 4 769 984 A1

FIG. 16A

FIG. 16B

Europäisches
Patentamt
European
Patent Office
Office européen
des brevets

# EUROPEAN SEARCH REPORT

**Application Number**

EP 25 21 7655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG. KONG ET AL: "A new design for precision clock synchronization based on FPGA", REAL TIME CONFERENCE, 2009. RT '09. 16TH IEEE-NPSS IEEE, PISCATAWAY, NJ, USA, 10 May 2009 (2009-05-10), pages 411-414, XP031562384, DOI: 10.1109/RTC.2009.5321499 ISBN: 9781424444540 * the whole document * | 1-15 | INV. H04J3/06 |
| X | CN 114 615 736 B (WUHAN ZHONGHUA TIANZHOU MEASUREMENT AND CONTROL) 29 March 2024 (2024-03-29) * paragraph [0001] * * paragraph [0005] - paragraph [0031] * * paragraph [0053] - paragraph [0082] * * figures 1-8 * | 1-15 | |
| A | US 2011/051754 A1 (LANSDOWNE RICHARD JAMES [GB]) 3 March 2011 (2011-03-03) * paragraph [0003] - paragraph [0015] * * paragraph [0028] - paragraph [0037] * * paragraph [0042] - paragraph [0043] * * figures 1,2a,2b,9,10 * | 1-15 | |

TECHNICAL FIELDS SEARCHED (IPC)

H04J

The present search report has been drawn up for all claims

| Place of search | Date of completion of the search | Examiner |
|---|---|---|
| The Hague | 14 April 2026 | Roldán Andrade, J |

EPO FORM 1503 03.82 (P04C01)

# ANNEX TO THE EUROPEAN SEARCH REPORT
## ON EUROPEAN PATENT APPLICATION NO.

EP 25 21 7655

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | Publication date | Patent family member(s) | Publication date |
|---|---|---|---|
| CN 114615736 B | 29-03-2024 | NONE | |
| US 2011051754 A1 | 03-03-2011 | CN 102577194 A | 11-07-2012 |
| | | US 2011051754 A1 | 03-03-2011 |
| | | WO 2011025746 A1 | 03-03-2011 |

EPO FORM P0459

For more details about this annex : see Official Journal of the European Patent Office, No. 12/82